# EUROPEAN PATENT APPLICATION

(11) **EP 2 863 004 A1**
(43) Date of publication of application: **22.04.2015**
(21) Application number: 14187264.8
(22) Date of filing: 01.10.2014
(51) Int. Cl.: E21B 10/14, E21B 10/20, E21B 10/22

(54) **Roller cutter drill bit with mixed bearing types**

(30) Priority: 02.10.2013 US 201361886009 P; 25.09.2014 US 201414496877
(71) Applicant: Varel International, Ind., L.P., Carrollton, TX 75006 (US)
(72) Inventor: King, William W., Houston, TX Texas 77069 (US)
(74) Representative: Ljungberg, Robert

(57) **Abstract**

A roller cutter drill bit with mixed bearing types includes a bit body (12) with at least one journal facet (36) and a cavity facet (34). A cavity extends into the bit body from the cavity facet (34). The bit body is configured to rotate about a bit axis (14) during drilling. A journal extends outward from the at least one journal facet (36). A first rotatable cutter (16) that supports a first plurality of cutting structures (23) has a journal portion received by the cavity. A second rotatable cutter (18) that supports a second plurality of cutting structures (23) has a cavity portion that receives the journal.

## Description

### PRIORITY CLAIM

The present application claims priority to U.S. Provisional Application for Patent No. 61/886,009, filed October 2, 2013, and entitled Mixed Bearing Disc Drill Bit, which is hereby incorporated by reference.

### TECHNICAL FIELD

The present invention relates generally to bits for drilling a wellbore, and more particularly to a disc drill bit having two different types of bearing structures.

### BACKGROUND

A roller cone rock bit is a cutting tool used in oil, gas, and mining fields to break through earth formations to shape a wellbore. Disc bits are similar to roller cone rock bits and also penetrate rock formations. However, a disc bit has typically been less durable than a roller cone drill bit due at least in part to its bearing configuration. Also, the rotatable cutters of a disc bit extend away from each other and away from the rotational axis of the drill bit. As a result, when drilling with a disc bit, a triangular shaped zone in the center of the borehole corresponding to the center of the drill bit is not cut by the cutters on the discs. The center of the borehole that is not drilled often creates an obstacle for which it is difficult or impossible for the bit to penetrate and continue to drill.

One attempt at solving this problem is to fix cutters into the nose of the bit. This approach is described in U.S. Patent No. 5,064,007 to Kaalstad ("Kaalstad") and U.S. Patent Application Publication No. 2007/0062736 by Cariveau et al., each of which is hereby incorporated by reference. Fixing cutters to the nose of the bit has met with limited success because the nose cutters perform much less of a ripping and cutting action than the cutters on the rotating cones.

Kaalstad describes a disc drill bit where three cavities are formed in the bit body. Each cavity receives a spindle housing cartridge. Each spindle housing cartridge provides a double spherical roller bearing that supports a rotatable spindle, and the rotatable spindle is coupled to a cutter disc. The cavities are limited in depth so as not extend beyond the centerline of the bit body because if all three were to extend to, or past the bit centerline, the cavities would break into and interfere with each other.

U.S. Patent No. Application Publication No. 2011/0024197 by Centala ("Centala"), which is hereby incorporated by reference, discloses an embodiment of a disc bit with a journal-mounted bearing structure. Three bosses extend from the bit body. A roller cone cutter is mounted to each journal. The extension of the journals is limited by the prior art overall symmetrical layout of the bit. In both cavity mounted spindle housing cartridge of Kaalstad and the journal mounted roller cones of Centala, the bearings were undersized compared to traditional roller cone rock bits of an equal diameter.

### SUMMARY

A roller cutter drill bit with mixed bearing types includes a bit body with at least one journal facet and a cavity facet. A cavity extends into the bit body from the cavity facet. The bit body is configured to rotate about a bit axis during drilling. A journal extends outward from the at least one journal facet. A first rotatable cutter that supports a first plurality of cutting structures has a journal portion received by the cavity. A second rotatable cutter that supports a second plurality of cutting structures has a cavity portion that is receives the journal.

In one embodiment, the journal facet is closer to the bit axis than the cavity facet. In another embodiment, a nose channel is formed in a nose portion of the bit body. Retention balls are inserted through the nose channel and are received in a ball race that is formed between the journal portion of the cutter disc and the cavity formed in the bit body.

Technical advantages of a roller cutter drill bit according to the teachings of the present disclosure include a more durable drill bit with more robust bearings in part because the length of the cylindrical bearing surface is increased due to the bit having an inward cavity bearing type and at least one outward spindle our journal type bearings.

Another technical advantage of a roller cutter drill bit according to the teachings of the present disclosure includes a drill bit configuration that brings cutting structures supported by rotatable cutters to bear proximate the center of the borehole for improved drilling performance over conventional disc drill bits.

Other aspects, features, and advantages will become apparent from the following detailed description when taken in conjunction with the accompanying drawings, which are a part of this disclosure and which illustrate, by way of example, principles of the inventions disclosed.

### BRIEF DESCRIPTION OF THE DRAWINGS

For a more complete understanding of the present invention and the advantages thereof, reference is now made to the following brief description, taken in connection with the accompanying drawings and detailed description, wherein like reference numerals represent like parts, in which:
Figure 1 illustrates a face of a rotatable cutter drill bit with mixed bearing types according to an embodiment of the present disclosure; and
Figure 2 illustrates a section view of the rotatable cutter drill bit of Figure 1.

### DETAILED DESCRIPTION OF THE DRAWINGS

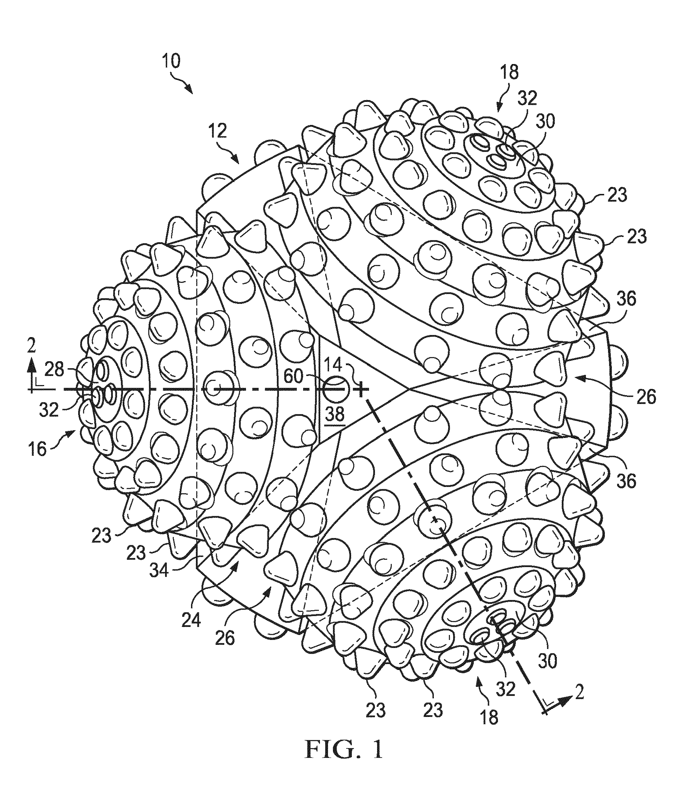

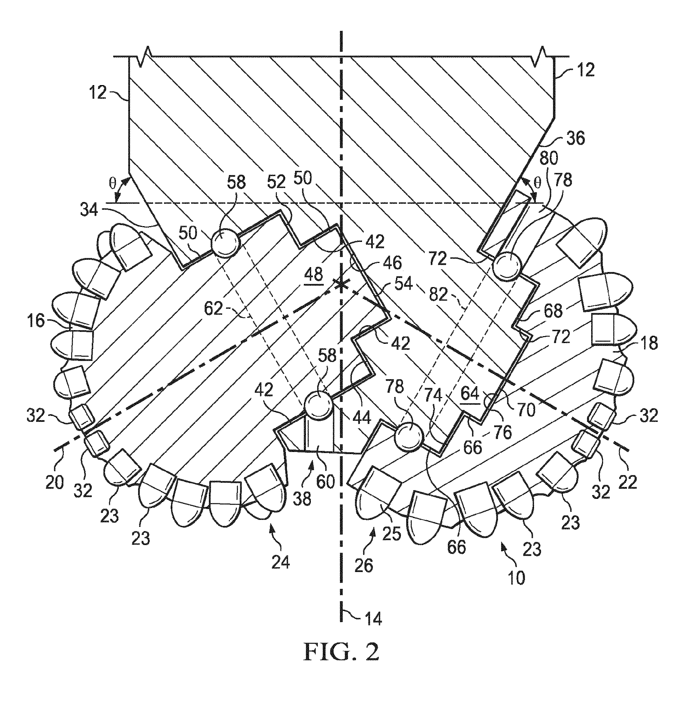

Reference is made to Figures 1 and 2, which respectively show a face view and a section view of a drill bit with mixed bearing types 10 according to the teachings of the present disclosure. The bit 10 includes a bit body 12 that defines a centerline 14 that corresponds to the axis of rotation of the bit 10 on the drill string. The drill bit 10 supports three rotatable cutters, one of a first bearing type 16 and two rotatable cutters of a second bearing type 18. The first bearing type is an inward cavity-type bearing interface and the second bearing type is an outward journal or spindle-type bearing interface. The mixed bearing types of drill bit 10 are each robust and the geometry of the drill bit 10 brings cutting structures supported by rotating cutters to bear on the center of the borehole. The bit body 12 may be formed from steel, a matrix metal, or any other material suitable for earth boring drill bits.

The three rotatable cutters are generally spaced apart from each other approximately 120 degrees circumferentially around the perimeter of the bit 10. As the rotation of the drill string rotates the drill bit 10, the rotatable cutters 16, 18 rotate about respective axes 20, 22 and cutting structures 23 supported by the rotatable cutters 16, 18 break apart and crush the rock formation and allow the bit to penetrate and form a borehole. The drill bit 10 has a diameter of approximately six inches, but a drill bit 10 according to the teachings of the present disclosure may have any suitable diameter known in the earth boring bit art. For example, the drill bit 10 may have a diameter up to 26 inches. In one embodiment, the diameter of drill bit 10 is either 8.5 or 10 inches.

The rotatable cutters include different bearing interfaces. One rotatable cutter 16 is mounted to a cavity formed in the bit body 12. The other two rotatable cutters 18 are mounted to a journal or spindle extending from the bit body 12. Each of the rotatable cutters 16, 18 have a generally frustoconically shaped outer surface. The mixed bearing type drill bit 10 differs from traditional roller cone drill bits in that the rotatable cutters 16, 18 face outward and away from the centerline 14 of the bit 10. Also, the rotatable cutters 16, 18 are different from traditional roller cone cutters in that the outer surface is in the shape of a truncated cone. Whereas traditional roller cone cutters have more of a full cone shaped outer surface that extends more towards a distal point. The truncated cone shape of the rotatable cutters 16, 18 resembles a disc. This disclosure will refer to the rotatable cutters 16, 18 as discs, rotatable discs, disc cutters or cutting discs.

Each rotatable disc 16, 18 supports multiple cutting structures 23 disposed in circumferential rows and extending from the outer surface of the rotatable discs 16, 18. In the illustrated embodiment, each rotatable disc 16, 18 supports respective base rows 24, 26 of cutting structures. The base rows 24, 26 of cutting structures are disposed proximate the base of the rotatable cutters 16, 18 and provide cutting action closest to the centerline 14 of the bit, which corresponds to the center of the borehole. The cutting structures are disposed in circumferential rows gradually decreasing in circumference toward respective nose surfaces 28, 30 of the rotatable discs 16, 18. In the illustrated embodiment, each nose surface 28, 30 supports three nose cutting structures 32.

The cutting structures may be cutter inserts that are typically formed of very hard material, such as tungsten carbide. The cutter inserts may alternatively be other very hard material incorporated into a cutting structure, such as a polycrystalline diamond compact, an impregnated diamond segment, a polycrystalline cubic boron nitride compact, or the cutter inserts may be formed of any of the material in the family of ceramic materials. The cutter inserts shown are dome-shaped, but they may be conical-shaped, chisel-shaped, double conical-shaped, ovoid-shaped, or any other shape suitable for drilling a wellbore through a rock formation. According to an alternate embodiment, the cutting structures may be in the form of teeth milled into the cutter 16, 18.

Each rotatable cutter disc 16, 18 is associated with a facet of the body 12. The facets are generally planar surfaces that are machined into the bit body 12. The bit 10 includes one cavity facet 34 associated with a cavity-mounted cutting disc 16 and two journal facets 36 each associated with respective journal-mounted cutter discs 18.

The cavity facet 34 is a generally flat surface milled to angle toward a nose 38 of the bit body 12. As such, the bit body 12 tapers toward the nose 38 of the bit. In certain embodiments, an angle θ of the cavity facet 34 with respect to the horizontal may be in the range of 55°-65°. For example, θ may be in the range of 57°-63°. The angle of the cavity facet 34 determines the angle of the axis 20 of rotation of the cavity mounted rotatable cutter 16. The axis 20 is orthogonal to the planar surface of the cavity facet 34, and therefore the angle of the axis 20 with respect to the horizontal is 90°-θ. Thus, the range of the angle of axis 20 is 25°-35°. For example, the angle of axis 20 with respect to the horizontal may be 27°-33°.

A body cavity is milled or cast into the body 12. The body cavity is defined by a cylindrical bearing surface 42, an annular thrust surface 44, and a base surface 46. A journal portion 48 of the cavity mounted disc cutter 16 is received by the body cavity 40. The journal portion 48 also includes a cylindrical bearing surface 50, an annular thrust surface 52, and a base surface 54. Each of the corresponding surfaces of the journal portion 48 and the body cavity form the bearing interface for the cavity mounted cutter disc 16.

In the embodiment illustrated, the cylindrical bearing surfaces are comprised of a first cylindrical bearing surface of a first diameter, which steps down to a second bearing surface of a second diameter. This step-down in diameter provides the thrust bearing surface 44 in the cavity to receive the thrust of the axial directed force on the disc cutter 16.

A depth of the body cavity is measured from the facet 34 to the base surface 46 of the cavity. The cavity depth corresponds to an axial length of cylindrical bearing surfaces, specifically disc cutter cylindrical bearing surface 50 and the corresponding cylindrical cavity bearing surface 42. Because the bit 10 includes less than three and preferably only one body cavity, the axial the depth of body cavity may extend into the bit body 12 beyond the centerline 14. By extending beyond the centerline 14, the body cavity can receive a longer journal portion 48 of the cavity-mounted disc 16. Specifically, the axial length of the cylindrical surface 50 forming the bearing surface is increased beyond a similarly sized conventional disc bit where the cavity depth is limited so as not to approach the centerline and risk breaking through to one of the other two cavities. According to the teachings of the present disclosure, by including only one inward cavity-type bearing interface in the disc drill bit, a more robust bearing interface is created between the cavity-mounted disc 16 and the bit body 12.

According to an alternate embodiment, the body cavity may receive a spindle housing cartridge as shown and described by U.S. Patent No. 5,064,007 to Kaalstad, which is hereby incorporated by reference.

The journal portion 48 of the cavity-mounted disc 16 is positioned in the body cavity and then retention balls 58 are inserted through a nose channel 60 formed in the nose 38 of the bit 10. The balls 58 are received in a race 62 formed in the journal 48. A plug (not shown) is then inserted into the nose channel 60 to secure the retention balls 58 in the race 62. The plug may be welded or otherwise secured in place to keep the retention balls 58 in the race 62.

A pair of journal facets 36 are similarly milled at an angle into the bit body 12. The journal facets 36 are generally flat surfaces milled to angle toward the nose 38 of the bit body 12. As such, the bit body 12 tapers toward the nose 38 of the bit. In certain embodiments, an angle θ of the journal facets 36 with respect to the horizontal may be 55°-65°. For example, θ may be 57°-63°. The angle of the journal facets 36 determines the angle of the axis 22 of the journal mounted rotatable cutters 18. As shown in Figure 2, the axis 22 is orthogonal to the planar surface of the journal facet 36, and therefore the angle of the axis 22 with respect to the horizontal is 90°-θ. Thus, the range of the angle of axis 22 is 25°-35°. For example, the angle of axis 22 with respect to the horizontal may be 27°-33°. The angle of the cavity facet 34 is equal to the angle of the journal facet 36, and the angle of the axis 20 of the cavity is equal to the angle of the axis 22 of the journal 64.

In the illustrated embodiment, the axes 20, 22 intersect at a common point that is coincident with the centerline 14. However, in an alternate embodiment, offset axes 20, 22 may facilitate effective and aggressive cutting as is described in U.S. Patent No. 5,147,000 to Kaalstad, which is hereby incorporated by reference.

The journal 64 is milled or cast into the body 12 and includes a cylindrical bearing surface 66, an annular thrust surface 64, and a circular thrust surface 68. A cavity portion of the journal mounted disc cutter 18 receives the journal 62. The cavity portion is defined by a cylindrical bearing surface 72, an annular thrust surface 74, and a circular thrust surface 76. Each of the corresponding surfaces of the journal 64 and the disc cutter cavity form the bearing interface for the journal mounted cutter disc 18.

In the embodiment illustrated, the cylindrical bearing surfaces are comprised of a first cylindrical bearing surface of a first diameter, which steps down to a second bearing surface of a second diameter. This step-down in diameter creates the annular thrust bearing surfaces 68, 74, which receive the thrust of the axially directed force on the journal mounted disc cutter 18.

An axial journal length is measured from the journal facet 36 to the circular thrust surface 70 of the journal 64. The axial journal length corresponds to an axial length of cylindrical bearing surfaces, specifically journal mounted disc cutter cylindrical bearing surfaces 66, 72.

To increase the axial length of the cylindrical bearing surfaces 66, 72 of the journal mounted disc cutter 18, and thus the robustness of the bearing interface, the bit body 12 is milled to have an asymmetrical cross section as shown in Figure 2. As such, the two journal facets 36 may be milled to be disposed closer to the centerline 14 than the one cavity facet 34. Despite the asymmetry of the journal facets 36, the cross section of the bit 10 with the disc cutters 16, 18 is symmetrical.

In addition to more a robust bearing interface, the asymmetrical journal facets 36 of the mixed bearing type disc drill bit 10 also allows the cutting structures 23 of one or more journal mounted cutter discs 18 to be disposed closer to the centerline 14. Specifically, the cutting structures 23 of the base row 26 of journal-mounted discs 18 are disposed to bear on the area at the center of the borehole, which may be an improvement over conventional disc bits that often leave a dead area near the nose of the bit, which resulted in less efficient drilling.

The diameter of the journal mounted disc cutter 18 may be larger than the diameter of the cavity mounted disc cutter 16. According to one embodiment, a six inch diameter bit 10 includes a cavity mounted disc cutter with a diameter of 3 and 3/4 inches and the two journal mounted cutter discs 18 each have a diameter of approximately four inches. The larger diameter journal mounted cutter 18 also contributes to bringing the cutting structures 23 of the base row 26 nearer to the center of the borehole.

Similar to the cavity-mounted disc 16, each journal-mounted disc 18 is positioned such that the journal 64 is received in the journal mounted cutter disc cavity and retention balls 78 are inserted through a channel 80 in the journal-mounted disc 18 to be received in a race 82 formed in the journal 64 and in the journal mounted cutter disc 18. A plug (not shown) is then inserted into the channel 80 and welded or otherwise secured in order to maintain the retention balls 78 in the race 82.

The mixed bearing types disc drill bit defines an overall layout that provides increased bit body 12 area for the deployment of an air circulation system, grease lubrication systems, and for cone retention ball lock deployment. The mixed bearing type disc drill bit according to the present disclosure can be used in mining, construction, water well, geothermal, or oil and gas drilling.

The foregoing describes only some embodiments of the invention(s), and alterations, modifications, additions and/or changes can be made thereto without departing from the scope and spirit of the disclosed embodiments, the embodiments being illustrative and not restrictive.

## Claims

1. A roller cutter drill bit, comprising:
a bit body defining a cavity extending into the bit body and being configured to rotate about a bit axis during drilling;
a journal extending outwardly from the bit body;
a first rotatable cutter supporting a first plurality of cutting structures and having a journal portion received by the cavity; and
a second rotatable cutter supporting a second plurality of cutting structures and
having a cavity portion receiving the journal.

2. The drill bit of claim 1 wherein the journal extends away from the bit axis.

3. The drill bit of claim 1 or 2 wherein the bit body includes a plurality of journals and a plurality of second rotatable cutters each mounted to respective journals.

4. The drill bit of any one of the preceding claims wherein a depth of the cavity extends beyond the bit axis.

5. The drill bit of any one of the preceding claims wherein:
the first rotatable cutter supports a first base row of cutting structures;
the second rotatable cutter supports a second base row of cutting structures; and
wherein the second base row of cutting structures is disposed closer to the bit axis than the first base row of cutting structures.

6. The drill bit of any one of the preceding claims wherein:
the first rotatable cutter defines a first axis;
the second rotatable cutter defines a second axis; and
wherein the first axis, the second axis, and the bit axis converge at a common point.

7. The drill bit of any one of the preceding claims wherein the bit body comprises a cavity facet and at least one journal facet, the cavity extending into the bit body from the cavity facet and the journal extending outwardly from the at least one journal facet.

8. The drill bit of claim 7 wherein the at least one journal facet is disposed closer to the bit axis than the cavity facet.

9. The drill bit of claim 7 wherein the bit body includes a plurality of journal facets, each journal facet being disposed closer to the bit axis than the cavity facet.

10. The drill bit of any one of the preceding claims wherein the bit body defines a nose channel configured to receive a plurality of retention balls, the nose channel disposed in a nose portion of the bit body.

11. The drill bit of any one of the preceding claims wherein a diameter of the second rotatable cutter is greater than a diameter of the first rotatable cutter.

12. The drill bit of any one of the preceding claims wherein the bit body comprises at least one journal facet, the at least one journal extending outwardly from the at least one journal facet and an angle of the at least one journal facet with respect to a horizontal is 55°-65°.

13. The drill bit of claim 12 wherein an angle of the at least one journal facet with respect to the horizontal is 57°-63°.

14. The drill bit of any one of the preceding claims wherein the first and the second plurality of cutting structures each comprise polycrystalline diamond compact cutter inserts.

15. The drill bit of any one of the preceding claims wherein the first and the second plurality of cutting structures each comprise cutter inserts formed of tungsten carbide.
